# EUROPEAN PATENT APPLICATION

(11) **EP 2 447 308 A2**
(43) Date of publication of application: **02.05.2012**
(21) Application number: 11186334.6
(22) Date of filing: 24.10.2011
(51) Int. Cl.: C08J 5/24

(54) **Composite compositions**

(30) Priority: 28.10.2010 US 914364
(71) Applicant: General Electric Company, Schenectady, NY 12345 (US)
(72) Inventor: Fang, Xiaomei, Niskayuna, NY New York 12309 (US); Lin, Wendy Wen-Ling, Niskayuna, NY New York 12309 (US); Finn, Scott, Niskayuna, NY New York 12309 (US); Woods, Jack Allen, Kent, WA Washington 98031 (US)
(74) Representative: Williams, Andrew Richard

(57) **Abstract**

In one embodiment, the present invention provides an uncured composite composition. The uncured composite composition includes an uncured resin and a triaxial braid. The triaxial braid includes a longitudinal axis, a first bias fiber extending in a first bias direction at a first bias angle to the longitudinal axis, a second bias fiber extending in a second bias direction at a second bias angle to the longitudinal axis, and an axial fiber extending in a direction parallel to the longitudinal axis; wherein the first bias fiber, the second bias fiber, and the axial fiber have a substantially same tow size, and the tow size is in a range of from about 1k to about 11k. A cured composite and a method of making the cured composite are also provided.

## Description

### BACKGROUND

The invention relates to an uncured composite composition including triaxial braid. Further, the invention relates to a cured composite made employing triaxial braid.

Composite materials made of fibers and a resin matrix are used to produce a wide range of commercial products, from sailboat hulls to aircraft components. Composite structures have a number of advantages, including strength-to-weight-ratios approaching or even surpassing those of the most advanced structural alloys.

Several processes or methods for forming composite bodies or structures are in conventional use. Generally, all of these methods involve the formation of a "layup" or preform of fibrous material, which generally takes the contours of the finished composite structure. This layup or preform may be formed of a fabric of structural fibers or individual fibers themselves, and may be "laid up" against a mandrel either manually or by a mechanized apparatus. One such method of forming a preform for composite structures is to braid a plurality of structural fibers about a mandrel to form a biaxial or triaxial braid.

With ever increasing composite applications in aerospace structures and components in recent years, a wide spectrum of carbon fiber forms, especially triaxial braids, have been used to meet the design requirements for different applications. Triaxial braided preforms are preferred to biaxial braids in many applications because triaxial braids produce a finished part, which has superior mechanical properties, principally strength and stiffness.

However, in certain applications, fiber reinforced composite materials may be deficient in one or more physical properties and enhancements may be required. For example, composites with resin rich pockets, formed from different fiber preforms, especially braid architecture, may have a tendency to generate microcracks during thermal cycling. Toughened resin systems have been reported to improve microcrack resistance of the composites. However, un-toughened resins may be easier to process in the composite manufacture than toughened resins as the resin transfer molding processes used to manufacture the composites typically require that the resin component be characterized by a relatively low injection viscosity in order to allow complete wetting and impregnation of the preform by the resin component. Further, use of untoughened resins for preparing composites may allow for broader selection of low cost resins and processing techniques. Additionally, further improvements in microcrack resistance may be required for toughened resins as well.

Thus, there is a need to select and design optimal braid architecture that result in composite structures with improved microcrack resistance. In addition there is a need to be able to utilize different resin systems along with braided preforms to prepare composites that display the physical properties and performance enhancements required by the end-use applications. The present invention provides additional solutions to these and other challenges associated with composite compositions.

### BRIEF DESCRIPTION

In one embodiment, the present invention provides an uncured composite composition. The uncured composite composition includes an uncured resin and a triaxial braid. The triaxial braid includes a longitudinal axis, a first bias fiber extending in a first bias direction at a first bias angle to the longitudinal axis, a second bias fiber extending in a second bias direction at a second bias angle to the longitudinal axis, and an axial fiber extending in a direction parallel to the longitudinal axis; wherein the first bias fiber, the second bias fiber, and the axial fiber have a substantially same tow size, and the tow size is in a range of from about 1k to about 11k.

In another embodiment, the present invention provides a method. The method includes contacting a formulation including an uncured resin with a triaxial braid to provide an uncured composite composition. The triaxial braid includes a longitudinal axis, a first bias fiber extending in a first bias direction at a first bias angle to the longitudinal axis, a second bias fiber extending in a second bias direction at a second bias angle to the longitudinal axis, and an axial fiber extending in a direction parallel to the longitudinal axis; wherein the first bias fiber, the second bias fiber, and the axial fiber have a substantially same tow size, and the tow size is in a range of from about 1 k to ab out 11k.

In yet another embodiment, the present invention provides a cured composite, including a cured resin and a triaxial braid. The triaxial braid includes a longitudinal axis, a first bias fiber extending in a first bias direction at a first bias angle to the longitudinal axis, a second bias fiber extending in a second bias direction at a second bias angle to the longitudinal axis, and an axial fiber extending in a direction parallel to the longitudinal axis; wherein the first bias fiber, the second bias fiber, and the axial fiber have a substantially same tow size, and the tow size is in a range of from about 1k to ab out 11k.

These and other features, embodiments, and advantages of the present invention may be understood more readily by reference to the following detailed description.

### DRAWINGS

These and other features, aspects, and advantages of the present invention will become better understood when the following detailed description is read with reference to the accompanying drawings, wherein:
FIG. 1 is a representation of a triaxial braid, according to one embodiment of the invention.
FIG. 2 is a graph of total microcrack length after every 400 cycles of thermal humidity cycling for different composite samples.

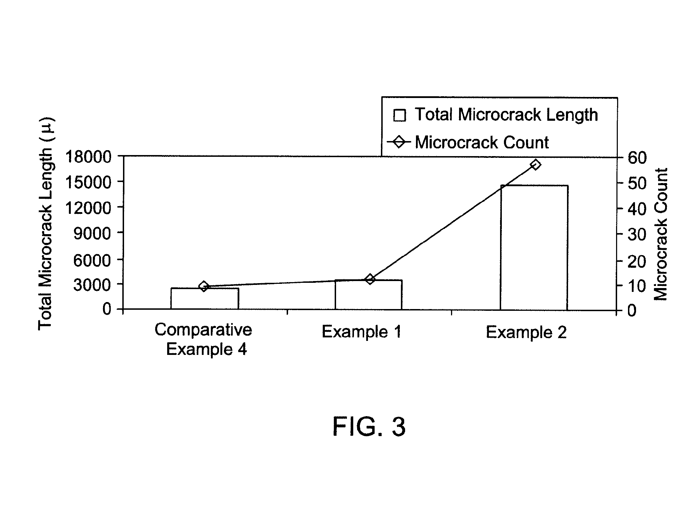

FIG. 3 is a graph of total microcrack length and microcrack count after 3200 cycles of thermal humidity cycling for different composite samples.

### DETAILED DESCRIPTION

In the following specification and the claims, which follow, reference will be made to a number of terms, which shall be defined to have the following meanings.

The singular forms "a", "an" and "the" include plural referents unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", and "substantially" is not to be limited to the precise value specified. In some instances, the approximating language may correspond to the precision of an instrument for measuring the value. Similarly, "free" may be used in combination with a term, and may include an insubstantial number, or trace amounts, while still being considered free of the modified term. Here and throughout the specification and claims, range limitations may be combined and/or interchanged, such ranges are identified and include all the sub-ranges contained therein unless context or language indicates otherwise.

In one embodiment the present invention provides an uncured composite composition. The uncured composite composition includes an uncured resin and a triaxial braid. The triaxial braid includes a longitudinal axis, a first bias fiber extending in a first bias direction at a first bias angle to the longitudinal axis, a second bias fiber extending in a second bias direction at a second bias angle to the longitudinal axis, and an axial fiber extending in a direction parallel to the longitudinal axis; wherein the first bias fiber, the second bias fiber, and the axial fiber have a substantially same tow size, and the tow size is in a range of from about 1k to about 11k.

In one embodiment, the uncured resin is selected from a thermoset resin. In one embodiment, the uncured resin is selected from a group consisting of epoxy, vinylester, polyimide, bismaleimide, phenol formaldehyde, polyurethane, CBT (cyclic polybutylene terephthalate), and polyester.

In one embodiment, the uncured resin includes an uncured epoxy resin. Uncured epoxy resin may be converted to a thermoset upon curing. In one embodiment, an uncured epoxy resin includes a reactive monomer having at least one reactive epoxy group. In one embodiment, an uncured epoxy resin includes a reactive monomer having a plurality of reactive epoxy groups. In one embodiment, the uncured epoxy resin includes at least one monomer having two epoxy groups, the uncured epoxy resin being converted to a cured epoxy resin upon treatment with a curing agent. In one embodiment, the uncured epoxy resin includes at least one monomer having more than two epoxy groups, the uncured epoxy resin being converted to a cured epoxy resin upon treatment with a curing agent.

In one embodiment, an uncured epoxy resin includes one or more of the following components: polyhydric phenol polyether alcohols, glycidyl ethers of novolac resins such as epoxylated phenol-formaldehyde novolac resin, glycidyl ethers of mononuclear di-and trihydric phenols, glycidyl ethers of bisphenols such as the diglycidyl ether of tetrabromobisphenol A, glycidyl ethers of polynuclear phenols, glycidyl ethers of aliphatic polyols, glycidyl esters such as aliphatic diacid diglycidyl esters, glycidyl epoxies containing nitrogen such as glycidyl amides and amide-containing epoxies, glycidyl derivatives of cyanuric acid, glycidyl resins from melamines, glycidyl amines such as triglycidyl ether amine of p-aminophenol, glycidyl triazines, thioglycidyl ethers, silicon-containing glycidyl ethers, monoepoxy alcohols, glycidyl aldehyde, 2, 2'-diallyl bisphenol A diglycidyl ether, butadiene dioxide, or bis(2,3-epoxycyclopentyl)ether.

In one embodiment, an uncured epoxy resin includes one or more of the following components: octadecylene oxide, epichlorohydrin, styrene oxide, vinylcyclohexene oxide, glycidyl methacrylate, diglycidyl ether of Bisphenol A (for example, those available under the trade designations "EPON 828," "EPON 1004," and "EPON 1001 F" from Shell Chemical Co., Houston, Tex., and "DER-332" and "DER-334", from Dow Chemical Co., Midland, Mich.), diglycidyl ether of Bisphenol F (for example, those under the trade designations "ARALDITE GY281" from Ciba-Geigy Corp., Hawthorne, N.Y., and "EPON 862" from Shell Chemical Co.), vinylcyclohexene dioxide (for example the product designated "ERL 4206" from Union Carbide Corp., Danbury, Conn.), 3,4-epoxycyclohexyl-methyl-3,4-epoxycyclohexene carboxylate (for example the product designated "ERL-4221" from Union Carbide Corp.), 2-(3,4-epoxycyclohexyl-5,5-spiro-3,4-epoxy) cyclohexane-metadioxane (for example the product designated "ERL-4234" from Union Carbide Corp.), bis(3,4-epoxycyclohexyl) adipate (for example the product designated "ERL-4299" from Union Carbide Corp.), dipentene dioxide (for example the product designated "ERL-4269" from Union Carbide Corp.), epoxidized polybutadiene (for example the product designated "OXIRON 2001" from FMC Corp.), epoxy silanes for example, beta-3,4-epoxycyclohexylethyltrimethoxysilane and gamma-glycidyloxypropyltrimethoxysilane, 1,4-butanediol diglycidyl ether (for example the product designated "ARALDITE RD-2" from Ciba-Geigy Corp.), hydrogenated bisphenol A diglycidyl ether (for example the product designated "EPONEX 1510" from Shell Chemical Co.), or polyglycidyl ethers of phenol-formaldehyde novolaks (for example the products designated "DEN-431" and "DEN-438" from Dow Chemical Co.).

In one embodiment, the uncured epoxy resin includes one or more of "Cycom 977-2" "Cycom 977-20", "Cycom PR520" and "Cycom 5208" available commercially from Cytec Engineered Materials Inc., (Tempe, Arizona); "HexFLow RTM-6", "HexFlow VRM 34" available commercially from Hexcel (Dublin, CA), or Epsilon^{™} 99100 available commercially from Henkel-Loctite (BayPoint, CA).

As described hereinabove, the uncured composite composition further includes a triaxial braid. As used herein, the term "braid" refers to interlaced sets of fibers and the term "triaxial braid" refers to a braid having three interlaced sets of fibers. As used herein, the term "fiber" includes a single fiber, a filament, a thread, or a plurality of fibers, filaments, or threads. In one embodiment, the term "fiber" includes untwisted or twisted fibers, filaments, or threads. In one embodiment, the term "fiber" includes a strand, a tow, or a yarn.

In one embodiment, a fiber includes a plurality of twisted filaments. In one embodiment, a fiber includes a plurality of untwisted filaments or a tow. The term "tow", as used herein, refers to a plurality of untwisted filaments. In one embodiment, a tow may be characterized by a tow size. As used herein, the term "tow size" refers to the number of filaments present within the tow. By way of example, as used herein, a tow size of 12k refers to a tow containing 12,000 filaments.

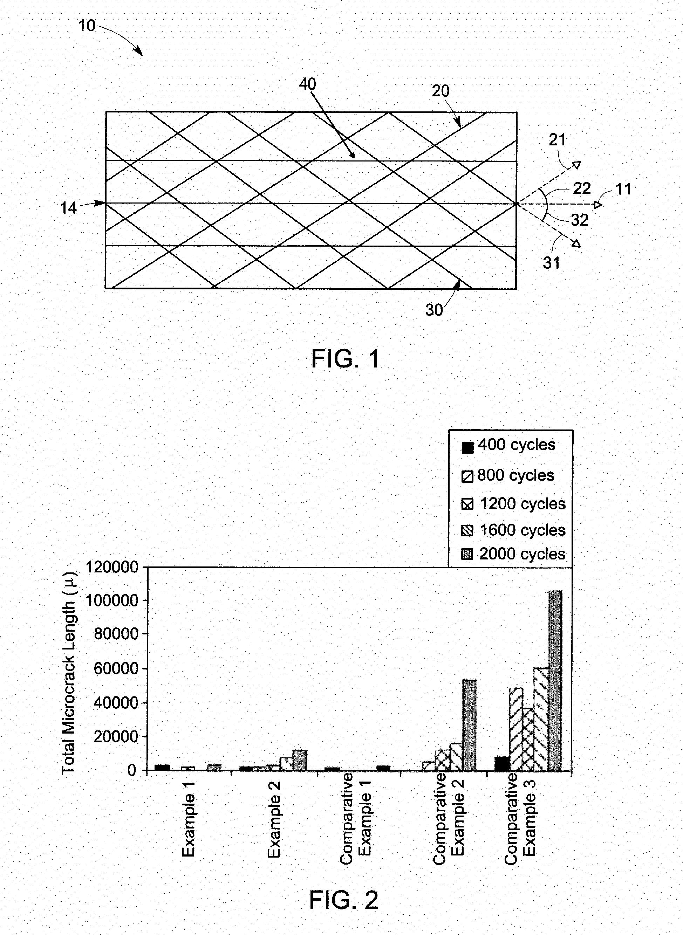

A triaxial braid includes a longitudinal axis, a first bias fiber extending in a first bias direction at a first bias angle to the longitudinal axis, and a second bias fiber extending in a second bias direction at a second bias angle to the longitudinal axis. With reference to FIG 1, in one embodiment, a triaxial braid 10 is characterized by a longitudinal axis 11. The triaxial braid further includes a first bias fiber 20 extending in a first bias direction 21 at a first bias angle 22 to the longitudinal axis and a second bias fiber 30 extending in a second bias direction 31 at a second bias angle 32 to the longitudinal axis. As described herein, the first bias angle 22 is the acute angle measured from the longitudinal braid axis to the first bias fiber. Similarly, the second bias angle 32 is the acute angle measured from the longitudinal braid axis to the second bias fiber.

In one embodiment, the first bias angle and the second bias angle are different. In one embodiment, the first bias angle is in a range of from about 15 degrees to about 75 degrees. In one embodiment, the first bias angle is in a range of from about 45 degrees to about 60 degrees. In one embodiment, the second bias angle is in a range of from about 30 degrees to about 75 degrees. In one embodiment, the second bias angle is in a range of from about 45 degrees to about 60 degrees. In one embodiment, the first bias angle and the second bias angle are the same and either one can be used to describe a braid angle. In one embodiment, the first bias angle and the second bias angle are about 60 degrees.

The triaxial braid further includes an axial fiber extending in a direction parallel to the longitudinal axis. With reference to FIG. 1, in one embodiment, the triaxial braid 10 includes an axial fiber 40 extending in a direction parallel to the longitudinal axis 11, that is, the acute angle between the axial fiber and the longitudinal fiber is about 0 degrees. Axial fibers may also be referred to as warps or unidirectionals or laid-in fibers. The number of axial fibers can be varied. In one embodiment, the axial fibers are spaced equidistantly or regularly or uniformly around the perimeter of the triaxial braid.

As shown in FIG. 1, the axial fibers are interwoven with the bias fibers, with the bias strands passing over and under the axial fibers. In one embodiment, the triaxial braid is braided in a style known as diamond braid in which the bias strands are braided in an over one under one configuration. In another embodiment, the triaxial braid is braided in a style known as regular braid in which the bias strands are braided in an over two, under two configuration. In yet another embodiment, the triaxial braid is braided in a style known as the hercules braid in which the bias strands are braided in an over three, under three configuration. Any of these braiding styles may be used in FIG. 1.

As described hereinabove, in one embodiment, the first bias fiber, the second bias fiber, and the axial fiber include a plurality of untwisted filaments or a tow characterized by a tow size. In one embodiment, the first bias fiber, the second bias fiber, and the axial fiber have a substantially same tow size or a substantially same number of filaments within the tow. In one embodiment, the tow size is a range of from about 1k to about 11k. In one embodiment, the tow size is in a range of from about 3k to about 9k. In one embodiment, the tow size is in a range of from about 4k to about 8k. In one embodiment, the tow size is about 6k.

In one embodiment, at least one of the first bias fiber, the second bias fiber, and the axial fiber include a glass fiber or a ceramic fiber. In one embodiment, at least one of the first bias fiber, the second bias fiber, and the axial fiber include a polymer fiber. Suitable examples of fibers include, but are not limited to, glass fibers (for example, quartz, E-glass, S-2 glass, R-glass from suppliers such as PPG, AGY, St. Gobain, Owens-Corning, or Johns Manville), polyester fibers, polyamide fibers (for example, NYLON® polyamide available from E.I. DuPont, Wilmington, Del., USA), aromatic polyamide fibers (such as KEVLAR® aromatic polyamide available from E.I. DuPont, Wilmington, Del., USA; or P84® aromatic polyamide available from Lenzing Aktiengesellschaft, Austria), polyimide fibers (for example, KAPTON® polyimide available from E.I. DuPont, Wilmington, Del., USA), and extended chain polyethylene (for example, SPECTRA® polyethylene from Honeywell International Inc., Morristown, N.J., USA; and DYNEEMA® polyethylene from Toyobo Co., Ltd.).

In one embodiment, at least one of the first bias fiber, the second bias fiber, and the axial fiber include a carbon fiber. Suitable examples of carbon fibers include, but are not limited to, AS2C, AS4, AS4C, AS4D, AS7, IM6, IM7, IM9, and PV42/850 from Hexcel Corporation; TORAYCA T300, T300J, T400H, T600S, T700S, T700G, T800H, T800S, T1000G, M35J, M40J, M46J, M50J, M55J, M60J, M30S, M30G, and M40from Toray Industries, Inc; HTS12K/24K, G30-500 3K/6K/12K, G30-500 12K, G30-700 12K, G30-700 24K F402, G40-800 24K, STS 24K, HTR 40 F22 24K 1550tex from Toho Tenax, Inc; 34-700, 34-700WD, 34-600, 34-600WD, 34-600 from Grafil inc.; and T-300, T-650/35, T-300C, T-650/35C from Cytec Industries. In one embodiment, a first bias fiber, a second bias fiber, and an axial fiber include a carbon fiber. In one embodiment, a first bias fiber, a second bias fiber, and an axial fiber is a tow containing a plurality of carbon fibers.

In one embodiment, the uncured resin is present in the uncured composite composition in an amount corresponding to from about 10 volume percent to about 80 volume percent based upon a total volume of the uncured composite composition. In another embodiment, the uncured resin is present in the uncured composite composition in an amount corresponding to from about 20 volume percent to about 70 volume percent based upon a total volume of the uncured composite composition. In yet another embodiment, the uncured resin is present in the uncured composite composition in an amount corresponding to from about 30 volume percent to about 60 volume percent based upon a total volume of the uncured composite composition.

In one embodiment, the triaxial braid is present in the uncured composite composition in an amount corresponding to from about 20 volume percent to about 90 volume percent based upon a total volume of the uncured composite composition. In another embodiment, the triaxial braid is present in the uncured composite composition in an amount corresponding to from about 30 volume percent to about 80 volume percent based upon a total volume of the uncured composite composition. In yet another embodiment, the triaxial resin is present in the uncured composite composition in an amount corresponding to from about 40 volume percent to about 70 volume percent based upon a total volume of the uncured composite composition.

In one embodiment, the present invention provides a method. The method includes contacting a formulation containing an uncured resin with a triaxial braid to provide an uncured composite composition. In one embodiment, contacting may be carried out under resin transfer molding (RTM), Scrimp brand molding, hand lay-up, compression molding, pultrusion molding, "B stage" forming, or autoclave molding conditions.

In one embodiment, the method includes impregnating a formulation containing an uncured resin into a triaxial braid. In one embodiment, the method includes infusing a formulation containing an uncured resin into a triaxial braid using the vacuum assisted resin transfer method (hereinafter known as "VARTM").

In one embodiment, the present invention provides an uncured composite composition, which is suitable for use in the preparation of a cured composite composition owing to the relatively low viscosities of the uncured resin. In one embodiment, the uncured resin used to prepare the cured composite has especially good viscosity characteristics for completely and uniformly contacting the triaxial braid during the infusion process.

In one embodiment, the formulation includes an uncured resin and an additional toughening agent. In one embodiment, the formulation including the uncured resin and the toughening agent has a viscosity suitable for the infusion process. In one embodiment, the uncured resin is substantially free of a toughening agent and the uncured resin has a viscosity suitable for the infusion process. In one embodiment, the formulation including the uncured resin has a viscosity in a range of from about 5 centiPoise to about 1200 centiPoise at the infusion temperature (temperature at which the infusion step is to be carried out). In another embodiment, the formulation has a viscosity in a range of from about 10 centiPoise to about 500 centiPoise at the infusion temperature. In yet another embodiment, the formulation has a viscosity in a range of from about 20 centiPoise to about 100 centiPoise at the infusion temperature.

In one embodiment, the contacting is carried out by infusing the uncured resin into the triaxial braid at an infusion temperature in a range of from 15°C to about 150°C. In another embodiment, the contacting is carried out by infusing the uncured resin into the triaxial braid at an infusion temperature in a range of from 30°C to about 120°C. In yet another embodiment, the contacting is carried out by infusing the uncured resin into the triaxial braid at an infusion temperature in a range of from 45°C to about 100°C.

In one embodiment, the method further includes curing the uncured composite composition to provide a cured composite. In one embodiment, curing is carried out by subjecting the uncured composite composition to heat, pressure, or both heat and pressure.

In one embodiment, the present invention provides a cured composite. The cured composite includes a cured resin and a triaxial braid. The triaxial braid includes a longitudinal axis, a first bias fiber extending in a first bias direction at a first bias angle to the longitudinal axis, a second bias fiber extending in a second bias direction at a second bias angle to the longitudinal axis, and an axial fiber extending in a direction parallel to the longitudinal axis; wherein the first bias fiber, the second bias fiber, and the axial fiber have a substantially same tow size, and the tow size is in a range of from about 1k to about 11k.

In one embodiment, the cured composite includes a cured epoxy resin and a triaxial braid. The triaxial braid includes a longitudinal axis, a first bias fiber extending in a first bias direction at a first bias angle to the longitudinal axis, a second bias fiber extending in a second bias direction at a second bias angle to the longitudinal axis, and an axial fiber extending in a direction parallel to the longitudinal axis; wherein the first bias fiber, the second bias fiber, and the axial fiber have a substantially same tow size, and the tow size is about 6k.

In one embodiment, the cured composite is resistant to microcrack formation. In one embodiment, the cured composite has a microcrack length less than about 20000 microns on the cross-section of a standard test coupon after 2000 cycles of the thermal-humidity test in a range of from about -54 °C to about 71 °C. In one embodiment, the cured composite has a microcrack length less than about 15000 microns on the cross-section of a standard test coupon after 2000 cycles of the thermal-humidity test in a range of from about -54 °C to about 71 °C. In one embodiment, the cured composite has a microcrack length less than about 3000 microns on the cross-section of a standard test coupon after 2000 cycles of the thermal-humidity test in a range of from about -54 °C to about 71 °C.

In one embodiment, an article is provided. The article includes the cured composite as described hereinabove. In one embodiment, the article is useful in aviation and aerospace applications requiring a combination of high strength and lightweight. In one embodiment, the article is a component of an aircraft, for example, wing, fuselage, or aircraft engine turbine blade. In one embodiment, the article is a component of an aircraft engine. In another embodiment, the article has applications in spacecraft, load bearing structures in automobiles, construction materials such as beams and roofing materials, personal communication devices such as cell phones, furniture such as tables and chairs, sporting goods such as tennis racquets and golf clubs, seating for sports facilities, load bearing structures in train carriages and locomotives, load bearing structures in personal watercraft, sail boats, and ships, and non-load bearing structures requiring a combination of high strength and light weight in any of the forgoing applications.

### EXAMPLES

The following examples illustrate methods and embodiments in accordance with the invention. Unless specified otherwise, all ingredients may be commercially available from such common chemical suppliers as Alpha Aesar, Inc. (Ward Hill, Massachusetts), Sigma Aldrich (St. Louis, Missouri), Spectrum Chemical Mfg. Corp. (Gardena, California), and the like.

Epoxy resin RTM6 (obtained from Hexcel, Dublin, CA) was used as the uncured resin for all the composites unless specified otherwise. Triaxial braid T800HB (from Toray Industries, Inc., Japan) characterized by different tow sizes (6k to 48k) of axial and bias fibers was used as reinforcement to fabricate the composites. All the triaxial braids had a first bias angle and a second bias angle of 60° with respect to the longitudinal axis as denoted by 0°/ 60°/-60°.

Preparation of cured composites using a triaxial braid containing axial and bias fibers having same tow sizes (Examples 1 -2).

Triaxial braid T800HB 6k/6k (6000 carbon fibers in axial and bias directions) having dimensions 35 cm by 35 cm was sealed in a nylon vacuum bag film enclosure having a resin inlet and outlet to attain a vacuum level of about 14.7 psi (full vacuum). As an optional step, a second layer of vacuum bag film could be applied if the first layer of vacuum bag film proved to be insufficient to achieve a full vacuum. Different number of plies of triaxial braids was applied to attain the final composite thickness of 1/8 inch. The assembly was heated to about 80°C while being subjected to an applied vacuum. Uncured resin formulation containing 250g of RTM6 resin (from Hexcel, Dublin, CA) was infused into the fiber structure under vacuum. The resin-filled assembly was cured under vacuum at 180°C for 2 hours to provide a void free cured composite panel (Example 1). Triaxial braid T800HB 12k/12k (12000 carbon fibers in axial and bias directions) was similarly used to prepare a cured composite panel (Example 2) using the method described herein above.

Preparation of cured composites using a triaxial braid containing axial and bias fibers having different tow sizes (Comparative Examples 1 -4).

Triaxial braid T800HB 6k/12k (60°/-60°/0°, 12000 carbon fibers in axial direction and 6000 fibers in bias direction) having dimensions 35 cm by 35 cm was sealed in a nylon vacuum bag film enclosure having a resin inlet and outlet to attain a vacuum level of about 14.7 psi (full vacuum). As an optional step, a second layer of vacuum bag film could be applied if the first layer of vacuum bag film proved to be insufficient to achieve a full vacuum. Different number of plies of triaxial braids was applied to attain the final composite thickness of 1/8 inch. The assembly was heated to about 80°C while being subjected to an applied vacuum. Uncured resin formulation containing 250g of RTM6 resin (from Hexcel, Dublin, CA) was infused into the fiber structure under vacuum. The resin-filled assembly was cured under vacuum at 180°C for 2 hours to provide a void free cured composite panel (Comparative Example 1). Triaxial braids T800HB 12k/24k and T800HB 24k/48k were similarly used to prepare cured composite panels (Comparative Example 2 and Comparative Example 3, respectively) using the method described herein above. Comparative Example 4 was prepared using the same procedure except that the uncured formulations employed contained Cycom 977-20 resin film (from Cytec Engineered Materials Inc., Tempe, Az).

Thermal humidity cycling of the composite panels was conducted using a Thermotron environmental chamber. The thermal shock chamber consisted of two compartments: high temperature (71°C) and low temperature (-54°C). The parts were held for five minutes in each chamber, which constituted one cycle. The composite panels were placed in a vertical position with a standing-free style during the cycling.

The composite microcracks were evaluated every 400 cycles Microcracks were analyzed using a microscope with a magnification of 50x and using internally developed automated image analysis software. The microcrack number and lengths were determined in a total cross-section of 5.5 inches by 1/8 inch combining three cut directions (0°, 90°, and 45°) on each sample.

**Table 1 Microcrack length after every 400 cycles of thermal humidity cycling**

| | Triaxial Braid T800 HB tow size | Total Microcrack Length (mm) | | | | |
|---|---|---|---|---|---|---|
| | | 400 cycles | 800 cycles | 1200 cycles | 1600 cycles | 2000 cycles |
| Example 1 | 6k/6k | 2.1 | 0 | 1.1 | 0 | 2.6 |
| Example 2 | 12k/12k | 1.4 | 0 | 0 | 0.3 | 2.4 |
| Comparative Example 1 | 6k/12k | 1.9 | 1.9 | 2.4 | 6.9 | 11.5 |
| Comparative Example 2 | 12k/24k | 0 | 4.8 | 12.3 | 16.0 | 53.1 |
| Comparative Example 3 | 24k/48k | 7.9 | 48.8 | 36.2 | 59.6 | 105.1 |

Referring to Table 1 and FIG. 2, the data illustrate that no significant cracks are observed for Examples 1 and 2 up to 2000 cycles. Comparative Examples 1-3 show greater microcrack lengths compared to Examples 1-2. Larger microcrack lengths are observed as tow size increases and the effect of tow sizes is more significant when the tow size is different in axial and bias directions.

**Table 2 Microcrack length and number after 3200 cycles of thermal humidity cycling**

| | Triaxial Braid T800 HB tow size | Resin | Total Microcrack Length (mm) | Microcrack Count |
|---|---|---|---|---|
| Example 1 | 6k/6k | RTM6 | 3.4 | 12 |
| Example 2 | 12k/12k | RTM6 | 16.7 | 57 |
| Comparative Example 4 | 12k/24k | 977-20 | 2.5 | 9 |

Referring to Table 2 and FIG. 2, the data after 3200 cycles of thermal humidity cycling illustrate that both the microcrack length and microcrack number for Example 1 are comparable to Comparative Example 4, which is considered to have to have good microcrack resistance. Further, braid 6k/6k (Example 1) exhibits better microcrack resistance that braid 12k/12k (Example 2).

The foregoing examples are merely illustrative, serving to exemplify only some of the features of the invention. The appended claims are intended to claim the invention as broadly as it has been conceived and the examples herein presented are illustrative of selected embodiments from a manifold of all possible embodiments. Accordingly, it is the Applicants' intention that the appended claims are not to be limited by the choice of examples utilized to illustrate features of the present invention. As used in the claims, the word "comprises" and its grammatical variants logically also subtend and include phrases of varying and differing extent such as for example, but not limited thereto, "consisting essentially of" and "consisting of." Where necessary, ranges have been supplied; those ranges are inclusive of all sub-ranges there between. It is to be expected that variations in these ranges will suggest themselves to a practitioner having ordinary skill in the art and where not already dedicated to the public, those variations should where possible be construed to be covered by the appended claims. It is also anticipated that advances in science and technology will make equivalents and substitutions possible that are not now contemplated by reason of the imprecision of language and these variations should also be construed where possible to be covered by the appended claims.

## Claims

1. An uncured composite composition, comprising:
an uncured resin; and
a triaxial braid comprising a longitudinal axis, a first bias fiber extending in a first bias direction at a first bias angle to the longitudinal axis, a second bias fiber extending in a second bias direction at a second bias angle to the longitudinal axis, and an axial fiber extending in a direction parallel to the longitudinal axis;
wherein the first bias fiber, the second bias fiber, and the axial fiber have a substantially same tow size, and the tow size is in a range of from about 1k to about 11k.

2. The uncured composite composition according to claim 1, wherein the tow size is in a range of from about 3k to about 9k.

3. The uncured composite composition according to claim 1, wherein the tow size is about 6k.

4. The uncured composite composition according to any one of the preceding claims, wherein at least one of the first bias fiber, the second bias fiber, and the axial fiber comprises glass fibers.

5. The uncured composite composition according to any one of the preceding claims, wherein at least one of the first bias fiber, the second bias fiber, and the axial fiber comprises carbon fibers.

6. The uncured composite composition according to any one of the preceding claims, wherein at least one the first bias angle and the second bias angle is in a range of from about 15 degrees to about 75 degrees.

7. The uncured composite composition according to any one of the preceding claims, wherein the triaxial braid is present in the uncured composite composition in an amount in a range of from about 40 volume percent to about 70 volume percent based upon a total volume of the uncured composite composition.

8. A method, comprising:
contacting a formulation comprising an uncured resin with a triaxial braid to provide an uncured composite composition,
wherein the triaxial braid comprises a longitudinal axis, a first bias fiber extending in a first bias direction at a first bias angle to the longitudinal axis, a second bias fiber extending in a second bias direction at a second bias angle to the longitudinal axis, and an axial fiber extending in a direction parallel to the longitudinal axis;
wherein the first bias fiber, the second bias fiber, and the axial fiber have a substantially same tow size, and the tow size is in a range of from about 1k to about 11k.

9. The method according to claim 8, comprising curing the uncured composite composition to provide a cured composite.

10. The method according to either of claim 8 or 9, wherein the contacting is carried out by infusing the uncured resin into the triaxial braid at an infusion temperature in a range of from about 15°C to about 150°C.

11. The method according to claim 10, wherein the formulation has a viscosity in a range of from about 5 centiPoise to about 1200 centiPoise at the infusion temperature.

12. The method according to any one of claims 8 to 11, wherein the contacting is carried out under vacuum assisted resin transfer method conditions.

13. A cured composite, comprising:
a cured resin; and
a triaxial braid comprising a longitudinal axis, a first bias fiber extending in a first bias direction at a first bias angle to the longitudinal axis, a second bias fiber extending in a second bias direction at a second bias angle to the longitudinal axis, and an axial fiber extending in a direction parallel to the longitudinal axis;
wherein the first bias fiber, the second bias fiber, and the axial fiber have a substantially same tow size, and the tow size is in a range of from about 2k to about 11k.

14. The cured composite according to claim 13, wherein the tow size is in a range of from about 3k to about 9k.

15. The cured composite according to claim 13, wherein the tow size is about 6k.
